## Europäisches Patentamt
## European Patent Office
## Office européen des brevets

(11) Veröffentlichungsnummer: **0 001 044**
A1

# EUROPÄISCHE PATENTANMELDUNG

(21) Anmeldenummer: 78100575.6

(22) Anmeldetag: 02.08.78

(51) Int. Cl.²: **A 61 C 15 00**
A 61 C 17 00, A 61 C 3 00

(30) Priorität: 10.09.77 DE 7728103 U

(43) Veröffentlichungstag der Anmeldung: 21.03.79 Patentblatt 79 6

(84) Benannte Vertragsstaaten:
BE CH DE FR GB LU NL SE

(71) Anmelder: Karl, Georg

D-8802 Bechhofen Waizendorf Nr.8(DE)

(72) Erfinder: Karl, Georg

D-8802 Bechhofen Waizendorf Nr.8(DE)

(74) Vertreter: Eitel, Alfred, Dr. et al,
Königstrasse 1
D-8500 Nürnberg(DE)

(54) Zahnreinigungsgerät.

(57) Zahnreinigungsgerät mit einem auswechselbar am einen Stielgriff (1) mit einem abgewinkelten Aufnameende (3) befestigbaren Befestigungseinsatz, z.B. einem Stimulator oder einer Spiralbürste, wobei der in Kunststoff eingebettete Stiel des Behandlungseinsatzes (5) mit Klemmsitz in eine Halteausnehmung des Stielgriffs einschiebbar ist. Zur Klemmhalterung dienen vorzugsweise Längsbohrungen an beiden Enden des Stielgriffs, so dass dieser gleichzeitig universell verwendbar ist und bei guter Klemmhalterung schmal bleibt und somit auch in alle Bereich des Mundes ohne Schwierigkeiten eingeführt werden kann.

Fig 1

Dr. Max Schneider † (1977)
Dr. Alfred Eitel Dipl.-Ing
Ernst Czowalla Dipl.-Ing.
Dipl.-Ldw.
Peter Matschkur Dipl.-Phys.

**Patentanwälte**

85 Nürnberg 106, den    1. August 19
Königstraße 1 (Museumsbrücke)
Fernsprech-Sammel-Nr. 20 39 31

P  Parkhaus Katharinenhof
   Parkhaus Adlerstraße

diess.Nr.: 29 3o3/Ma-Rl.

Georg  K a r l , 88o2 Bechhofen-Waizendorf Nr.8
----------------------------------------------------

"Zahnreinigungsgerät"

Die Erfindung betrifft ein Zahnreinigungsgerät mit einem auswechselbar an einem Stielgriff mit einem abgewinkelten Aufnahmeende befestigbaren Behandlungseinsatz, z.B. einem Stimulator oder einer Spiralbürste.

Bei den bislang bekannt gewordenen Zahnreinigungsgeräten der vorstehend genannten Art sind die Stielgriffe mit Querausnehmungen zum Einsetzen des Drahtstiels der Spiralbürste versehen, wobei die Halterung durch eine Klemmschraube bewirkt wird,die entweder ein abgewinkeltes, in einer Nut des Griffstiels liegendes Stielende übergreift oder aber den eine Querbohrung durchsetzenden Stiel derSpiralbürste an die Seitenwand derQuerausnehmung anquetscht.

Deutsche Bank A. G. Nürnberg Nr. 330 698  BLZ 760 700 12  •  Hypobank Nürnberg Nr. 1 580 274 501. BLZ 780 202 14

Diese bekannten Befestigungsarten sind nicht nur konstruktiv aufwendig, mit dem zusätzlichen Nachteil, daß bei häufigem Gebrauch die Gefahr eines Ausschlagens der Gewinde und damit einer Funktionsstörung entsteht, sondern bedingen auch, daß unmittelbar im Anschluß an den Behandlungseinsatz eine erhebliche Verdickung des Stielgriffs vorhanden ist, die die Handhabung des Zahnreinigungsgeräts imMund des Benutzers erheblich erschwert.

Zur Vermeidung dieser Schwierigkeiten ist bei einem Zahnreinigungsgerät der eingangs genannten Art gemäß der Erfindung vorgesehen, daß der in Kunststoff eingebettete Stiel desBehandlungselements mit Klemmsitz in eine Halteausnehmung des Stielgriffs einschiebbar ist.

Im Gegensatz zu bekannten Zahnreinigungsgeräten, bei denen zum Anquetschen mit Hilfe einer Schraube es bereits bekannt war,eine Kunststoffhülse auf den Drahtstiel der Spiralbürste aufzuschieben, ist gemäß der vorliegenden Erfindung dieser Stiel formschlüssig in Kunststoff eingebettet, so daß der Kunststoffüberzug nicht,wie bei den bekannten Anordnungen, auf dem Stielgriff verschiebbar ist. Nur dadurch ist die erfindungsgemäße Klemmsitzhalterung am Stielgriff möglich, die sowohl ein rascheres und einfacheres Auswechseln der Behandlungseinsätze, gegenüber den bislang bekannten Konstruktionen, gewährleistet, als auch zu einer konstruktiv einfacheren Gestaltung des Zahnreinigungsgerätes führt.

Mit besondedem Vorteil kann dabei die Kunststoffumhüllung am Stielende als verdickter zylindrischer Klemmstopfen ausgebildet sein,
dessen Durchmesser einMehrfaches des Durchmessers des Bürstenstiels beträgt. Durch einen derartig verdickten Klemmstopfen ergibt sich eine wesentlich bessere Klemmsitzhalterung,während umgekehrt durch das Absetzen des Kunststoffüberzugs zum Behandlungsabschnitt der Spiralbürste hin ein relativ geringer Stieldurchmesser vorhanden ist, der die Manipulation im Mund, insbesondere
bei der Behandlung von weit im Mundinnern liegenden Backenzähnen
erleichtert.

In weiterer Ausgestaltung der Erfindung kann am vorderen Ende des
Klemmstopfens ein überstehender Anschlagbund angeformt sein,dessen
Funktion nicht allein und vor allen Dingen nicht in erster Linie
der Einschubbegrenzung beim Einsetzen in die Halteausnehmung des
Stielgriffs dient, sondern vorallem das Herausnehmen des Behandlungseinsatzes aus seiner Klemmsitzhalterung sehr einfach möglich
macht, ohne daß man das Behandlungsende selbst dabei anfassen muß.

Der Griffstiel kann mit Vorteil an beiden Enden mit Halteausnehmungen zurAufnahme von Behandlungseinsätzen versehen sein. Dabei
kann der eine Halteeinsatz beispielsweise eine Spiralbürste und
der andere einen Stimulator aufnehmen, wobei dieser Stimulator
ein Kunststoffteil darstellt, dessenStielende entsprechend der
vorstehend beschriebenen Konstruktion aufgebaut ist, d.h. einen
zylindrischen Klemmabschnitt zum klemmenden Einschieben in eine Halteausnehmung des Stielgriffs aufweist . Durch diesen Aufbau ist es möglich, auch einen Stimulator mit einfach auswechselbaren Behandlungseinsätzen zu schaffen, im Gegensatz zu den bislang bekannten Anordnungen, bei denen der Stimulatoreinsatz entweder in den Stielgriff eingeschraubt werden mußte, was in jedem Fall das, aus hygienischen Gründen möglichst zu vermeidende,Ergreifen des eigentlichen Behandlungsabschnitts notwendig machte, oder aber die Stimulatorteile, d.h. schlanke kegelförmige Kunststoffspitzen waren einstückig am Stielgriff angeformt.

Bei einer besonders bevorzugten Ausführungsform der Erfindung soll ein Ende des Stielgriffs abgekröpft sein und die Halteausnehmungen jeweils als axiale Sackbohrungen der Endabschnitte ausgebildet sein.

Um sicherzustellen, daß der Stielgriff optimal in der Hand des Benutzers liegt und damit auch ohne Schwierigkeiten jede gewünschte Stelle im Mund erreicht werden kann, soll der Stielgriff im Bereich beider Enden Griffabschnitte mit flachgestreckten Griffmulden für die Finger eines Benutzers aufweisen, wobei die Griffmulden derart ineinander übergehen, daß die Griffabschnitte im wesentlichen einen dreieckigen Querschnitt mit abgerundeten Ecken aufweisen.

Die durch die erfindungsgemäßen Griffabschnitte für jede der beiden möglichen Benutzungsformen des zweiseitig verwendbaren Zahnreinigungsgerätes liegt der Stielgriff verschiebungsfrei in der

Hand des Benutzers, ohne daß er hierzu die Finger krampfhaft um den notwendigerweise mit einem relativ geringen Durchmesser·versehenen Stielgriff zu drücken braucht.Eine weitere Verbesserung der verschiebungsfreien Handhabung läßt sich schließlich auch noch dadurch erzielen, daß der Stielgriff mit, vorzugsweise die Griffabschnitte begrenzenden, Umfangsriefungen versehen ist.

Weitere Vorteile, Merkmale und Einzelheiten der Erfindung ergeben sich aus der nachfolgenden Beschreibung eines Ausführungsbeispiels sowie an Hand der Zeichnung. Dabei zeigen:

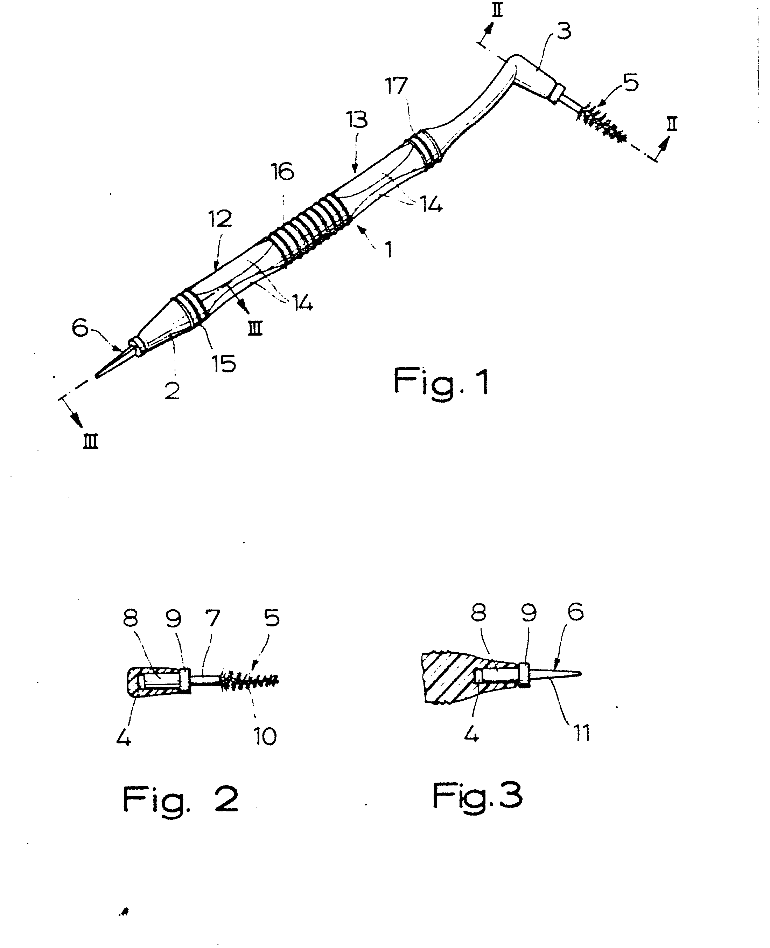

Figur 1 eine Ansicht eines erfindungsgemäßen Zanreinigungsgeräts und

Figuren 2 und 3 Schnitte längs der Linie II-II bzw.III-III in Figur 1.

Das erfindungsgemäße Zahnreinigungsgerät umfaßt einen Stielgriff 1, der sowohl am geradeauslaufenden Ende 2, als auch am abgekröpften Ende 3 mit einer als axiale Sackbohrung ausgebildeten Halteausnehmung 4 versehen ist. In diese Halteausnehmung 4 ist der Stiel eines Behandlungselements, beispielsweise einer Spiralbürste 5 oder eines Stimulators 6 mit Klemmsitz einschiebbar.

Zu diesem Zweck ist der üblicherweise aus verdrillten Drähten gebildete Stiel der Spiralbürste 5 in eine Kunststoffumhüllung 7 eingebettet, die im Bereich des Stielendes als verdickter zylin-

orischer Klemmstopfen 8 ausgebildet ist. Am vorderen Ende des Klemmstopfens 8 ist ein überstehender Anschlagbund 9 angeformt, der sowohl der Einschubbegrenzung beim klemmenden Einsetzen in die Halteausnehmung 4, als auch einem erleichterten Wiederherausnehmen aus der Klemmsitzhalterung dient, ohne daß hierzu der Borstenabschnitt lo der Spiralbürste 9 angefaßt werden muß.

Der Stimulator 6 ist ein Kunststoffteil aus weichelastischem Kunststoff mit einer kegelförmigen langgestreckten Spitze 11 zum Massieren des Zahnfleisches zwischen den Zähnen, die an einen Klemmabschnitt anschließt, der entsprechend den Abschnitten 8 und 9 der vorstehend beschriebenen Spiralbürste aufgebaut ist.

Der Stielgriff 1 ist mit zwei Griffabschnitten 12 und 13 mit langgestreckten Griffmulden 14 für die Finger eines Benutzers versehen. Beidseits der Griffabschnitte sind Umfangsriefungen 15, 16 und 17 angeordnet, die zusätzlich zu der durch die Ausbildung der Griffabschnitte bereits bewirkten verschiebungssicheren Halterung des Stielgriffs ein Abrutschen auch bei nassen Fingern unmöglich machen.

Patentansprüche:

1. Zahnreinigungsgerät mit einem auswechselbar am einen Stielgriff mit einem abgewinkelten Aufnahmeende befestigbaren Behandlungseinsatz, z.B. einem Stimulator oder einer Spiralbürste, dadurch gekennzeichnet, daß der in Kunststoff eingebettete Stiel des Behandlungseinsatzes (5, 6) mit Klemmsitz
   in eine Halteausnehmung (4) des Stielgriffs (1) einschiebbar
   ist.

2. Zahnreinigungsgerät nach Anspruch 1, dadurch gekennzeichnet,
   daß die Kunststoffumhüllung (7) am Stielende als verdickter
   zylindrischer Klemmstopfen (8) ausgebildet ist, dessen Durchmesser ein Mehrfaches des Durchmessers des Bürstenstiels beträgt.

3. Zahnreinigungsgerät nach Anspruch 1 oder 2, gekennzeichnet
   durch einen überstehenden Anschlagbund (9) am vorderen Ende
   des Klemmstopfens (8).

4. Zahnreinigungsgerät nach einem der Ansprüche 1 bis 3, dadurch
   gekennzeichnet, daß der Griffstiel (1) an beiden Enden mit
   Halteausnehmungen (4) zur Aufnahme von Behandlungseinsätzen
   (5, 6) versehen ist.

5. Zahnreinigungsgerät nach Anspruch 4, dadurch gekennzeichnet, daß ein Ende (3) des Stielgriffs (1) abgekröpft ist und die Halteausnehmungen (4) als axiale Sackbohrungen der Endabschnitte (2, 3) ausgebildet sind.

6. Zahnreinigungsgerät nach einem der Ansprüche 1 bis 5, dadurch gekennzeichnet, daß der Stielgriff (1) im Bereich beider Enden Griffabschnitte (12, 13) mit langgestreckten Griffmulden (14) für die Finger eines Benutzers versehen ist.

7. Zahnreinigungsgerät nach Anspruch 6, dadurch gekennzeichnet, daß die Griffabschnitte (12, 13) im wesentlichen einen dreieckigen Querschnitt mit abgerundeten Ecken aufweisen.

8. Zahnreinigungsgerät nach einem der Ansprüche 1 bis 7, dadurch gekennzeichnet, daß der Stielgriff (1) mit, vorzugsweise die Griffabschnitte (12, 13) begrenzenden, Umfangsriefungen (15, 16, 17) versehen ist.

0001044

1/1

Fig. 1

Fig. 2

Fig. 3

Europäisches
Patentamt

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | US - A - 3 987 549 (P. ROBERTELLI)<br>* Figuren 2,3; Spalte 2, Zeile 49 - Spalte 3, Zeile 21 * | 1,2 | A 61 C 15/00<br>17/00<br>3/00 |
| | FR - A - 1 460 553 (J. LE MONGNE & CIE)<br>* Figuren 1-7; Seite 1, rechte Spalte, Zeilen 7-14; Seite 1, rechte Spalte, Zeile 25 - Seite 2, rechte Spalte, Zeile 6 * | 1-4,8 | |
| | US - A - 1 355 037 (E. DZIUK)<br>* Figuren; Seite 1, Zeilen 49-67 * | 1,3 | **RECHERCHIERTE SACHGEBIETE (Int. Cl.²)**<br><br>A 61 C<br>A 61 H<br>A 46 B<br>F 16 B |
| | GB - A - 1 296 543 (P.A. AXELSSON)<br>* Figuren 1-7; Seite 1, Zeile 93 - Seite 2, Zeile 41 * | 1-3,5 | |
| | US - A - 1 506 417 (S. DONALDS)<br>* Figuren; Seite 1, Zeilen 61-99 * | 1 | |
| | US - 1 796 367 (O. GROVE)<br>* Figuren; Seite 2, Zeilen 54-92 * | 1 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur |
| | US - 2 211 852 (VU VAN-AN)<br>* Figur 2; Seite 2, Zeilen 11-21 *<br><br>./. | 1 | T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 15-12-1978 | VEREECKE |

EPA form 1503.1 06.78

0001044

Europäisches
Patentamt

EUROPÄISCHER RECHERCHENBERICHT

Nummer der Anmeldung

EP 78 10 0575
-2-

| Kategorie | EINSCHLÄGIGE DOKUMENTE | | KLASSIFIKATION DER ANMELDUNG (Int.Cl.²) |
|---|---|---|---|
| | Kennzeichnung des Dokuments mit Angabe, soweit erforderlich, der maßgeblichen Teile | betrifft Anspruch | |
| | FR - A - 613 268 (R. WITHYCOMBE) <br> * Figuren; Seite 1, Zeile 47 - Seite 2, Zeile 23 * <br><br> --- <br><br> US - A - 3 060 581 (R. AYMAR et al.) <br> * Figuren 1-4; Spalte 2, Zeilen 13-20 * <br><br> --- | 1 <br><br><br><br><br> 8 | |
| | | | RECHERCHIERTE SACHGEBIETE (Int. Cl.²) |